# EUROPEAN PATENT APPLICATION

(11) **EP 2 682 242 A1**
(43) Date of publication of application: **08.01.2014**
(21) Application number: 11859890.3
(22) Date of filing: 28.07.2011
(51) Int. Cl.: B27J 1/00, B27N 3/06, B32B 3/20

(54) **A BAMBOO BOARD AND A COMPOSITE BOARD AND FABRICATION METHOD FOR SAME**

(30) Priority: 28.02.2011 JP 2011041753
(71) Applicant: Koyo Sangyo Co., Ltd., Tokyo 181-0013 (JP)
(72) Inventor: YAKO, Michio, Tokyo 101-0044 (JP)
(74) Representative: Lang, Johannes
(86) International application number: PCT/JP2011/067206
(87) International publication number: WO 2012/117581

(57) **Abstract**

A bamboo board 10 of the present invention is produced by preparing a plurality of square tubular bodies 12 fabricated by cutting a surface layer 11a of tubes that form bamboo rods 11 so that the cross sectional surfaces that are orthogonal to the longitudinal direction of the bamboo rods 11 have two groups of two parallel facing surfaces, aligning the plurality of square tubular bodies 12 parallel to one another, and gluing facing cut surfaces 12a of the plurality of square tubular bodies 12 in place by means of a first adhesive agent 21. The bamboo board is produced as a tube without splitting bamboo rods or cutting and shaping an arc-shaped bamboo material into a planar shape in a conventional method is a light-weight board having a sufficient strength, due to less deformation such as warping when using bamboo shaped into a planar configuration and use of a natural hollow structure of bamboo.

## Description

### Technical field

The present invention relates to a bamboo board by using a bamboo rod, a composite board in which laminated face materials are glued on the bamboo board, and a fabrication method for these boards.

### Background art

Generally, a bamboo material is advantageous in supplying a large quantity at a low cost due to a higher growth than wood. Also, a bamboo material is highly valuable as structural materials such as buildings and fittings from its flexible and stronger property.

A conventional method for processing bamboo to make plywood is a method by using a bamboo laminated lumber, comprising aligning a plurality of bamboo materials formed into a plate by cross-cut-sawing and rip-sawing a raw bamboo in the width direction, laminating bamboo materials of other forms of plates on the bamboo materials, laterally shifting joints of upper and lower bamboo materials, and gluing together a joint and a laminated and superposed part thereof with an adhesive agent disclosed in e.g. Japanese Unexamined Patent Publication No. 9-024505 (claim 1, para. 0026, Fig. 1).

Another method for processing bamboo to make plywood by using bamboo laminated lumber is a method for producing a laminated lumber of an optional shape such as column, bar and surface, comprising optionally cutting a raw bamboo material in the fibrous direction, cutting the bamboo material cut into an arc-shaped cross sectional shape in a flat plate, and gluing a plurality of bamboo materials in a flat plate (e.g. Japanese Unexamined Patent Publication No. 10-166312 (claim 1, para. 0019, Fig. 2)).

### Prior art document

### Patent Document

Patent Document 1: Japanese Unexamined Patent Publication No. 09-024505 (claim 1, para. 0026, Fig. 1)
Patent Document 2: Japanese Unexamined Patent Publication No. 10-166312 (claim 1, para. 0019, Fig. 2)

### Summary of the invention

### Problems to be solved by the invention

However, a method by using a bamboo laminated lumber described in the above conventional Japanese Unexamined Patent Publication No. 09-024505 and a method for producing a laminated lumber described in the above conventional Japanese Unexamined Patent Publication No. 10-166312 might unfortunately generate distortion such as warping after gluing due to use of a bamboo material obtained by splitting bamboo into an arc-shaped cross section and cutting it in a flat plate. The above processing can generate a lot of unrecyclable tag ends, and gluing of each flat plate requires a large quantity of adhesive agents, leading to less economical process. In addition, preparation of light boards was hard to achieve.

The aim of the present invention is to provide a bamboo board and a composite board that are light-weight, less prone to deformation such as warping and have sufficient strength, and a fabrication method therefor.

### Means for solving the problems

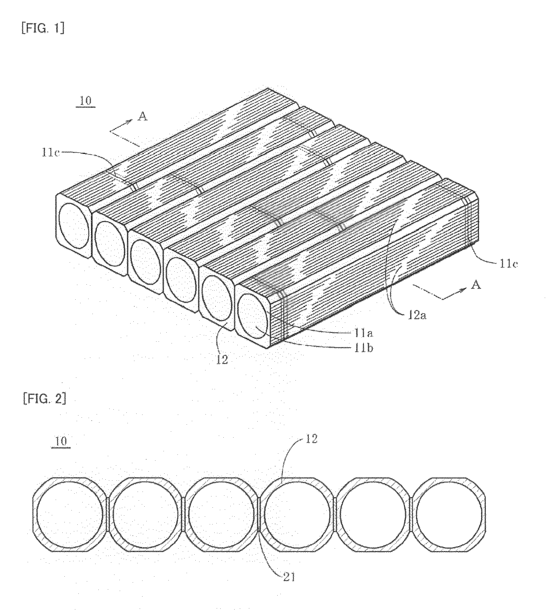

The first view of the present invention, as shown in Figs. 1 to 3, is to provide a bamboo board comprising: preparing a plurality of square tubular bodies 12 fabricated by cutting a surface layer 11a of tubes that form bamboo rods 11 so that the cross sectional surfaces that are orthogonal to the longitudinal direction of the bamboo rods 11 have two groups of two parallel facing surfaces; aligning the plurality of square tubular bodies 12 parallel to one another; and gluing facing cut surfaces 12a of the plurality of square tubular bodies 12 in place by means of a first adhesive agent 21.

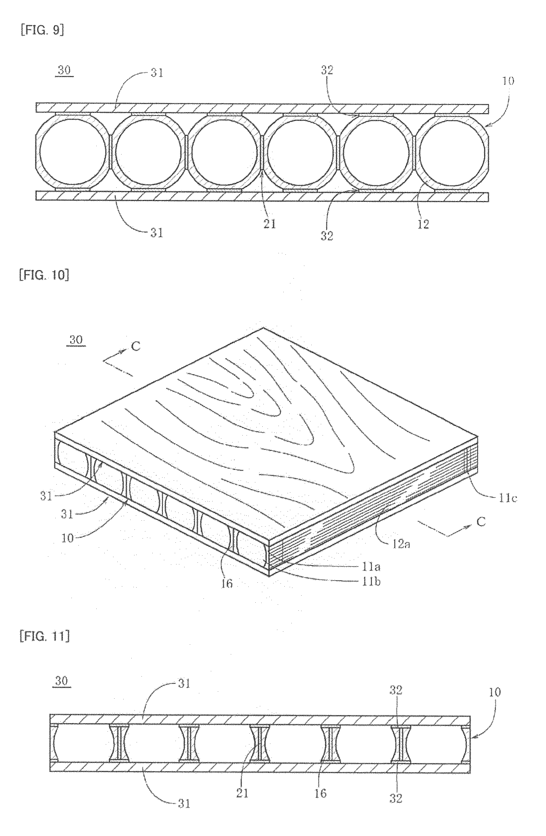

The second view of the present invention, as shown in Figs. 10 to 13, is to provide a bamboo board comprising: preparing a plurality of osteoid bodies 16 fabricated by cutting off two facing surfaces out of four surfaces of the square tubular bodies 12 based on the first view in the longitudinal direction of the square tubular bodies 12; aligning the plurality of osteoid bodies 16 parallel to one another; and gluing uncut-off and remaining facing cut surfaces 12a of the plurality of osteoid bodies 16 in place by means of the first adhesive agent 21.

The third view of the present invention, as shown in Fig. 2, is to provide an invention based on the first or second view, wherein the first adhesive agent 21 is an aqueous adhesive agent.

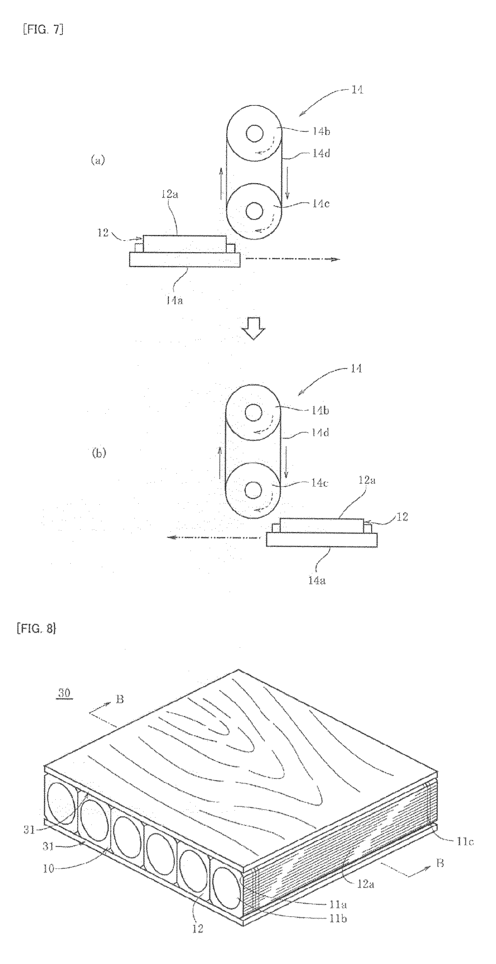

The fourth view of the present invention, as shown in Figs. 8 to 11, is to provide a composite board comprising a bamboo board 10 based on the first to third views, and a face material 31 laminated on one or both sides of the bamboo board 10 by means of a second adhesive agent 32.

The fifth view of the present invention, as shown in Figs. 9 and 11, is to further provide an invention based on the fourth view, wherein the second adhesive agent 32 is an aqueous adhesive agent.

The sixth view of the present invention, as shown in Fig. 8 to Fig. 11, is to further provide an invention based on the fourth view, wherein the face material 31 is formed of a plywood, a particle board, a medium density fiberboard, a panel or a paper.

The seventh view of the present invention, as shown in Figs. 1 to 3, is to provide a fabrication method comprising: a cutting and forming process for cutting a surface layer 11a of tubes that form bamboo rods 11 and forming the bamboo rods 11 into a square tubular shape to obtain square tubular bodies 12 so that the cross sectional surfaces that are orthogonal to the longitudinal direction of the bamboo rods 11 have two groups of two parallel facing surfaces; a first adhesive agent applying process for preparing a plurality of square tubular bodies 12, aligning the plurality of square tubular bodies 12 parallel to one another and applying the first adhesive agent 21 on facing cut surfaces 12a of the plurality of square tubular bodies 12; and a first gluing process for gluing the facing cut surfaces 12a of the plurality of square tubular bodies 12 in place by means of the first adhesive agent 21.

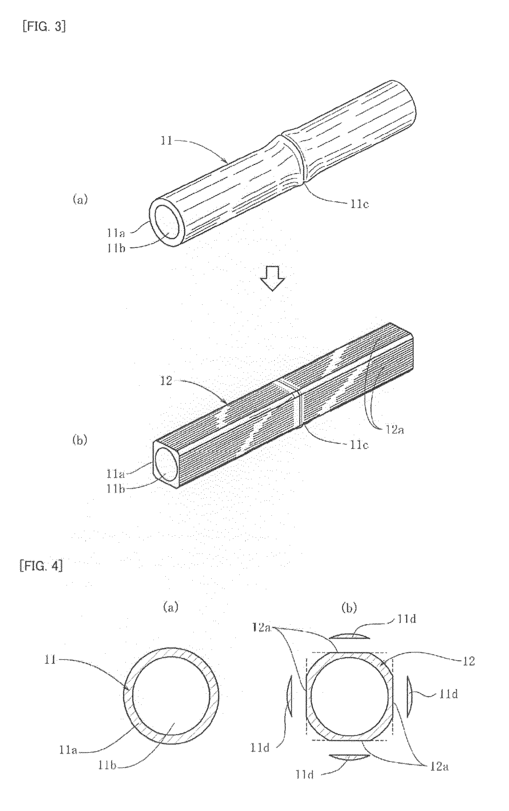

The eighth view of the present invention, as shown in Fig. 3, is to provide a fabrication method for a bamboo board comprising: a cutting and forming process for cutting a surface layer 11a of tubes that form bamboo rods 11 and forming the bamboo rods 11 into a square tubular shape to obtain square tubular bodies 12 so that the cross sectional surfaces that are orthogonal to the longitudinal direction of the bamboo rods 11 have two groups of two parallel facing surfaces; a cutting-off process for cutting off two facing surfaces out of four surfaces of the square tubular bodies 12 in the longitudinal direction of the square tubular bodies 12 to obtain osteoid bodies 16 as shown in Fig. 10 to Fig. 13; a first adhesive agent applying process for preparing a plurality of osteoid bodies 16, aligning the plurality of osteoid bodies 16 parallel to one another, and applying the first adhesive agent 21 on uncut facing cut surfaces 12a of the plurality of osteoid bodies 16; and a first gluing process for gluing facing cut surfaces 12a of the plurality of osteoid bodies 16 in place by means of the first adhesive agent 21.

The ninth view of the present invention, as shown in Fig. 2, is to further provide an invention based on the seventh or eighth view, wherein the first adhesive agent 21 is an aqueous adhesive agent.

The tenth view of the present invention, as shown in Figs. 8 to 11, is to provide a fabrication method for a composite board comprising: a second adhesive agent applying process for applying the second adhesive agent 32 on one or both surfaces of the bamboo board 10 produced based on the seventh to ninth views; and a second gluing process for gluing a face material 31 on a surface of the bamboo board 10 having the second adhesive agent 32 applied by means of the second adhesive agent 32.

The eleventh view of the present invention, as shown in Figs. 9 and 11, is to further provide an invention based on the tenth view, wherein the second adhesive agent 32 is an aqueous adhesive agent.

The twelfth view of the present invention, as shown in Figs. 8 to 11, is to provide an invention based on the tenth view, wherein the face material 31 is formed of a plywood, a particle board, a medium density fiberboard, a panel or a paper.

### Advantageous effect of the invention

The bamboo board of the present invention can more readily glue a plurality of bamboo rods by removing surface layers thereof using a cutting apparatus to form into a square tubular shape as a square tubular body and gluing cut facing surfaces with a first adhesive agent than gluing uncut surface layers of each bamboo rod. Also, the bamboo board of the present invention can produce a rectangular bamboo board without splitting a bamboo rod and cutting and shaping an arc-shaped bamboo material into a flat plate, and reduce deformation such as warping when using a bamboo material formed in a flat plate. In addition, use of natural hollow structure of bamboo can produce a bamboo board having a hollow portion therein and make a bamboo board lighter than a bamboo board having a solid structure.

### Brief description of the drawings

Fig. 1 is a perspective view showing a bamboo board of a first embodiment of the present invention,
Fig. 2 is a sectional view taken along the line A-A of Fig. 1,
Fig. 3(a) is a perspective view of a bamboo rod with leaves removed; and Fig. 3(b) is a perspective view of a square tubular body obtained by cutting a bamboo rod surface layer,
Fig. 4(a) is a sectional view of a bamboo rod corresponding to Fig. 3(a); and Fig. 4(b) is a sectional view of a square tubular body corresponding to Fig. 3(b),
Fig. 5(a) is a sectional view of a bamboo rod in another embodiment and Fig. 5(b) is a sectional view of a square tubular body,
Fig. 6 is a flow sheet showing processes of cutting a surface layer of a bamboo rod with a cutting apparatus,
Fig. 7 is a flow sheet showing processes of polishing a cut surface of a square tubular body with a polishing apparatus,
Fig. 8 is a perspective view of a composite board of a second embodiment of the present invention,
Fig. 9 is a sectional view taken from line B-B of Fig. 8,
Fig. 10 is a perspective view of a composite board of a third embodiment of the present invention,
Fig. 11 is a sectional view taken from line C-C of Fig. 10,
Fig. 12(a) is a sectional view of a square tubular body; and Fig. 12(b) and (c) are sectional views of osteoid bodies obtained by cutting off the same,
Fig. 13 is a perspective view of an osteoid body corresponding to Fig. 12(c),
Fig. 14(a) is a perspective view of a square tubular body obtained by cutting a bamboo rod surface layer; and Fig. 14(b) is a perspective view of a square tubular body whose end is provided with a fittable joint portion,
Fig. 15 is a flow sheet showing processes of gluing square tubular bodies whose end is provided with a joint portion, and
Fig. 16 is a side view of a square tubular body showing different shapes of joint portions.

### Best mode for carrying out the invention

Next, the embodiments of the present invention will be described with reference to the drawings.

### <First embodiment>

A bamboo rod 11 (Fig. 3) formed of a bamboo board 10 (Fig. 1) of this embodiment can be selected according to a purpose of use of a composite board 30 (Fig. 8) and environment, but may be all kinds of plants of Poales grass order, Poaceae family and Bambusoideae subfamily whose stem is lignified such as arbor (type of tree), preferably e.g. Phyllostachys bambusoides, Phyllostachys heterocycla, Phyllostachys nigra, Phyllostashys aurea or Phyllos tachys heterocycla.

As shown in Figs. 1 to 3, the bamboo board 10 comprises: preparing a plurality of square tubular bodies 12 fabricated by cutting surface layers 11a of tubes that form bamboo rods 11; aligning the plurality of square tubular bodies 12 parallel to one another; and gluing facing cut surfaces 12a of the plurality of square tubular bodies 12 in place by means of a first adhesive agent 21 so that the cross sectional surfaces that are orthogonal to the longitudinal direction of the bamboo rods 11 have two groups of two parallel facing surfaces. The bamboo rod 11 has a joint portion 11c provided with an interval in the longitudinal direction of the bamboo rods 11, in addition to a surface layer 11a and a hollow portion 11b that form a tube. The first adhesive agent 21 can be selected according to the purpose of use of the bamboo board 10 and environment, but in view of working environment, disaster prevention and pollution control, safer aqueous adhesive agents are preferably used. Illustrative example of the aqueous adhesive agent includes an acrylic emulsion adhesive agent, an SBR-based emulsion adhesive agent, a vinyl acetate emulsion adhesive agent, and an aqueous vinylurethane adhesive agent.

A fabrication method for the bamboo board 10 using the bamboo rod 11 thus formed will be described. First, a plurality of bamboos with the same diameter are prepared in advance, and are cut into a specific length as a bamboo rod 11 by removing leaves from the bamboo (Fig. 3(a), Fig. 4(a)). The plurality of bamboo rods 11 are infiltrated in an insect-controlling liquid and fungicide. Illustrative example of the insect-controlling liquid and fungicide includes bifenthrin, permethrin, pyrethroid, and imidazole. Then, surface layers 11a of tubes that form the bamboo rods 11 are cut and the bamboo rods 11 are formed into a square tubular shape to obtain square tubular bodies 12 (Fig. 3(b), Fig. 4(b)). The bamboo is cut and formed so that the cross sectional surfaces that are orthogonal to the longitudinal direction of the bamboo rods 11 have at least one group of two parallel facing surfaces, preferably two groups thereof. If the cross sectional surfaces that are orthogonal to the longitudinal direction of the bamboo rods 11 have only one group thereof, another group thereof is provided by cutting front and back surfaces of a bamboo board obtained by means of a later-mentioned first gluing process.

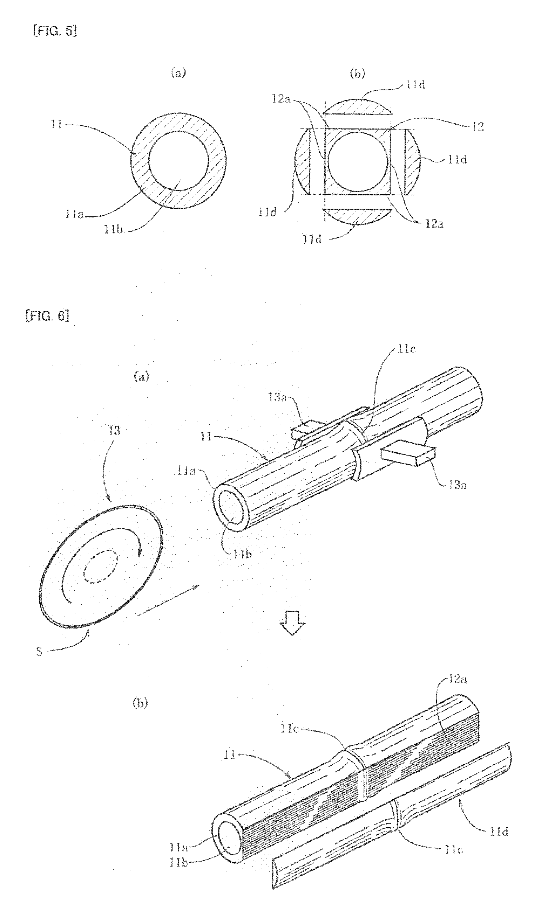

When a bamboo rod 11 whose thickness is shown in Fig. 5(a) is used, square tubular bodies 12 whose section is a square or a rectangle are obtained as shown in Fig. 5(b). The square tubular bodies 12 shown in Fig. 5(b) are advantageously more adhesive than the square tubular bodies 12 shown in Fig. 4(b) when a plurality of square tubular bodies 12 are aligned parallel to one another to glue each of cut surfaces 12a because no curved surface is contained between cut surfaces 12a.

Herein, a cutting apparatus 13 shown in Fig. 6 is used to cut a surface layer 11a of tubes that form bamboo rods 11. The cutting apparatus 13 is provided with a circular saw blade S capable of cutting e.g. only one surface of the bamboo rods 11. The bamboo rods 11 are fixed to a seat (not shown) of the cutting apparatus 13 by fixing means 13a,13a to rotate the circular saw blade S, and move the bamboo rods 11 toward the circular saw blade S or move the circular saw blade S toward the bamboo rods 11. Accordingly, a surface layer of the bamboo rods 11 is cut at a desired position, and the bamboo rods 11 are provided with a cut surface 12a formed according thereto. The bamboo rods 11 are cut and formed within a thickness range. Then, the bamboo rods 11 are axially rotated at an angle of 180 degrees to form a cut surface 12a of two parallel facing surfaces by cutting another surface layer of the bamboo rods 11 according to the above process. When two cut surfaces of another two parallel facing surfaces are formed, the bamboo rods 11 are subsequently axially rotated at an angle of 90 degrees to cut surface layers as shown above and to obtain square tubular bodies 12. The component 11d in Fig. 4(b), Fig. 5(b) and Fig. 6(b) indicates a waste material removed by a cutting process. In this embodiment, a cutting apparatus 13 having a circular saw blade S is described, but it is not particularly limited to this embodiment if it is an apparatus capable of cutting to form square tubular bodies 12. The waste material 11d can be used as a face material having a bamboo pattern on a surface by polishing a cut surface thereof with a later-described polishing apparatus to make the cut surface smooth and by attaching paper, etc. thereon.

Herein, a polishing apparatus 14 as shown in Fig. 7 is used to make a cutting-processed cut surface 12a smooth. The polishing apparatus 14 has a slide bed 14a capable of reciprocatively moving in a horizontal direction to place the square tubular bodies 12, a driving roller 14b that is positioned on the upper side of a reciprocating range of the slide bed 14a and rotatably driven by a driven motor (not shown), a driven roller 14c that is positioned on the lower side of the driving roller 14b and on the upper side of an upper surface of the slide bed 14a to be rotatably provided, a belt 14d that is put on the driving roller 14b and the driven roller 14c to whose outer peripheral surface an abrasive grain is glued, a tensile force providing mechanism (not shown) that adjusts an interval between the driving roller 14b and the driven roller 14c to provide a specific tensile force for the belt 14d, and a raising/lowering and pressing mechanism (not shown) that raises or lowers the belt 14d having the tensile force together with the driving roller 14b and the driven roller 14c to press the belt 14d against the square tubular bodies 12 on the slide bed 14a with a specific pressure. The square tubular bodies 12 are fixed on the slide bed 14a of the polishing apparatus 14 (Fig. 7(a)), and the belt 14d is rotated together with the driving roller 14b and the driven roller 14c. While the belt 14d is lowered together with the driving roller 14b and the driven roller 14c by means of the raising/lowering and pressing mechanism, the slide bed 14a is reciprocatively moved (Figs. 7(a) and (b)). As a result, one cut surface of the square tubular bodies 12 is polished to make the cut surface 12a smooth. Other surfaces are made smooth according to the above step.

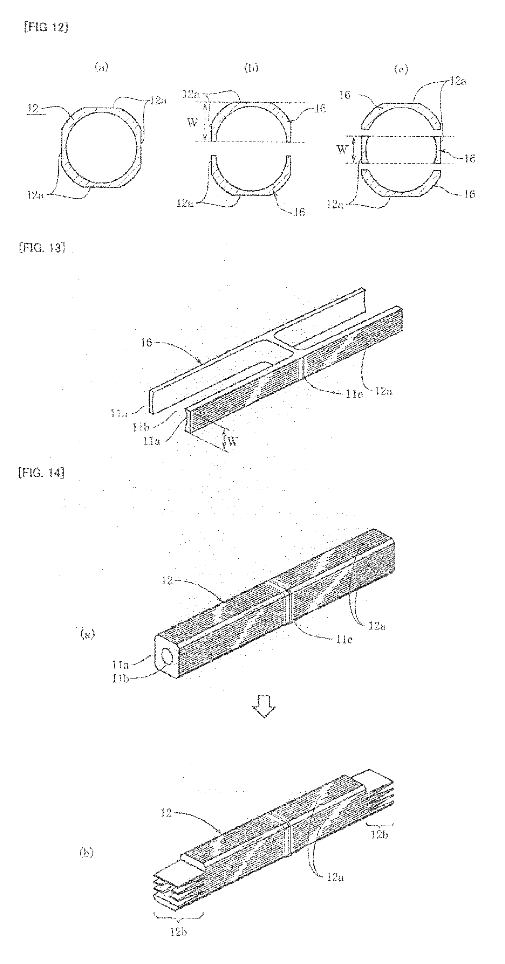

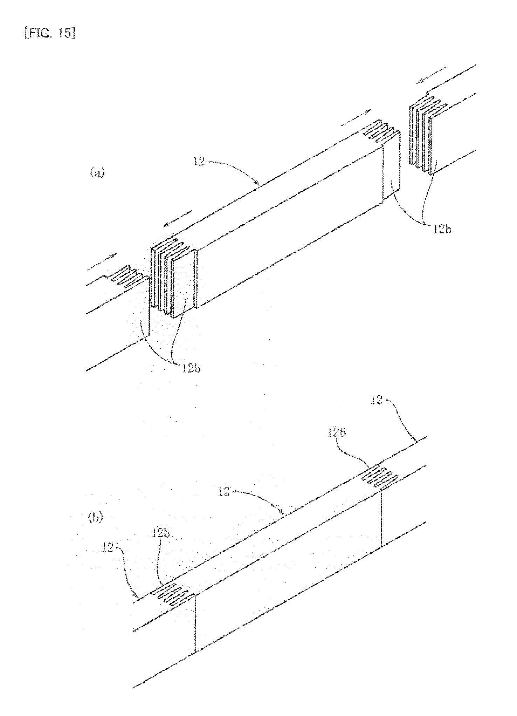

If the length of the longitudinal direction of the square tubular bodies 12 formed is insufficient enough to produce a bamboo board of a desired size, as shown in Fig. 14, such a bamboo board can be produced by forming a fittable joint portion 12b at least one end of the square tubular bodies 12, and as shown in Fig. 15, ends of the square tubular bodies 12 adjacent to one another in the longitudinal direction are joined with the joint portion 12b to make a long square tubular body 12. Also, an adhesive agent is applied to a joint surface (not shown) of the joint portion 12b to increase its gluing strength.

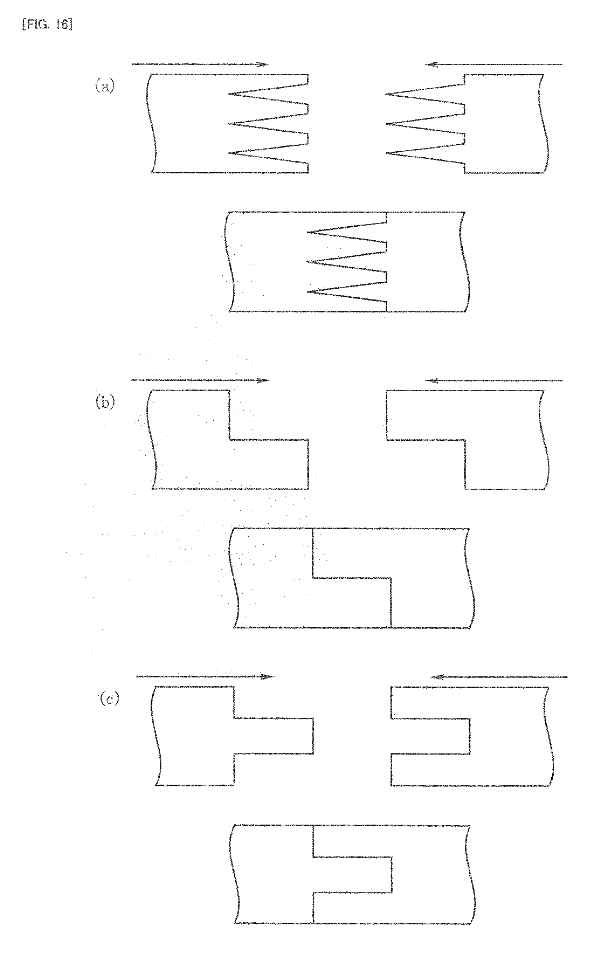

In Figs. 14 and 15, the joint portion 12b is provided with a shape of a plurality of protruding and recessed portions with finger joint processing, but it is not particularly limited to this shape if the ends can be matched, e.g. a known shape such as serration, L-shape and a combination of protruding and recessed portions as shown in Figs. 16(a) to (c).

Next, a plurality of square tubular bodies 12 cut and formed in the above manner are prepared and the plurality of square tubular bodies 12 are aligned parallel to one another. Then, a first adhesive agent 21 is applied to facing cut surfaces 12a of the plurality of square tubular bodies 12. In this case, a first adhesive agent 21 may be applied to at least one of the facing cut surfaces 12a. Finally, the facing cut surfaces 12a of the plurality of square tubular bodies 12 are glued in place by means of the first adhesive agent 21 to produce a bamboo board 10 by using the square tubular bodies 12. When a plurality of square tubular bodies 12 are aligned in a line to glue facing cut surfaces 12a in place by means of the first adhesive agent 21, pressure is preferably imparted to the plurality of square tubular bodies 12 that are aligned in a line so that each of glued surfaces are in contact with each other.

The bamboo board 10 produced is low in strength in a gluing direction. However, the plurality of bamboo boards 10 are prepared and laminated by means of the first adhesive agent 21 so that the longitudinal directions of the square tubular bodies 12 formed of the bamboo board 10 come orthogonal to each other to significantly improve the gluing strength. Furthermore, another bamboo board can be produced by using a bamboo rod whose diameter is different from the bamboo board 10 produced by the above step, and these bamboo boards are laminated by means of the first adhesive agent 21 to significantly improve the gluing strength as well.

In the bamboo board 10 thus produced, the surface layers 11a of the plurality of bamboo rods 11 are removed with a cutting apparatus to form the square tubular bodies 12 as a square tubular shape and the facing cut surfaces 12a are glued in place by means of the first adhesive agent 21. Therefore, the bamboo board 10 can be more readily and strongly glued than a case where surface layers of each of the bamboo rods 11 uncut are glued. In addition, the bamboo board 10 is produced as a tube and less prone to deformation such as warping generated when using bamboo formed in a flat plate without splitting a bamboo rod 11 and cutting and forming from an arc-shaped bamboo to flat plate in a conventional method. Since a natural hollow structure of bamboo is used to produce a bamboo board, the bamboo board 10 can be provided as a light bamboo board having a hollow portion 11b therein, compared to a solid structure.

### <Second embodiment>

Figs. 8 and 9 show a second embodiment of the present invention. The numbered components in the Figs. 8 and 9 represent the same components in Figs. 1 and 2. A composite board 30 of this embodiment has a bamboo board 10 of the first embodiment, and a face material 31 laminated on one or both surfaces of the bamboo board 10 by means of a second adhesive agent 32. Illustrative example of the face material 31 includes a plywood, a particle board, a medium density fiberboard, a panel and a paper. The second adhesive agent 32 can be selected according to the purpose of use of the composite board 30 and environment, but an aqueous adhesive agent is preferably used. The second embodiment is configured as the first embodiment except for the above features.

A fabrication method of a composite board 30 thus configured will be described. After applying a second adhesive agent 32 on one or both surfaces of the above bamboo board 10, a face material 31,31 is glued on an applying surface of the bamboo board 10 having the second adhesive agent 32 applied by means of a second adhesive agent 32 to produce the composite board 30. When the bamboo board 10 and the face material 31, 31 are glued by means of the second adhesive agent 32, pressure is preferably imparted to the bamboo board 10 and the face material 31, 31 so that glued surfaces are in contact with each other.

In the composite board 30 thus produced, when one or both surfaces of the bamboo board 10 and the face material 31 are glued by means of the second adhesive agent 32, the front and back surfaces of the bamboo board 10 are cut surfaces 12a. Therefore, the composite board 30 can be more readily and strongly glued than a case where a bamboo board formed without cutting surface layers formed of the front and back surfaces for bamboo board production and the face material 31 are glued.

### <Third embodiment>

Figs. 10 to 13 show a third embodiment of the present invention. The numbered components in the Figs. 10 to 13 represent the same components in Figs. 3 to 5 and Figs. 8 and 9. In this embodiment, a plurality of osteoid bodies 16 obtained by cutting off two facing surfaces out of four surfaces of square tubular bodies 12 obtained by a cutting and forming process in the longitudinal direction of the square tubular bodies 12 are prepared and aligned parallel to one another, and uncut and remaining facing cut surfaces 12a of the plurality of osteoid bodies 16 are glued in place by means of a first adhesive agent 21 to produce a bamboo board 10. The third embodiment is configured the same as the second embodiment except that the bamboo board 10 thus produced is used.

A fabrication method of the composite board 30 thus configured will be described. First, as in the above first embodiment, square tubular bodies 12 are obtained from a bamboo rod 11 by a cutting and forming process as shown in Fig. 12(a). Next, two facing surfaces out of four surfaces of the square tubular bodies 12 are cut off in the longitudinal direction of the square tubular bodies 12 to obtain osteoid bodies 16. The thickness of osteoid bodies 16 (W) is adjusted according to a desired thickness of the composite board 30. While two osteoid bodies are obtained by one cut-off process in Fig. 12(b), 3 or more osteoid bodies may be obtained by two or more cut-off processes in Fig. 12(c). As shown in Fig. 13, cut-off facing surface layers 11a, 11a of the osteoid bodies 16 show no separation from each other so long as they are glued by a joint portion 11c. Next, a plurality of osteoid bodies 16 cut off are prepared and aligned parallel to one another. Then, a first adhesive agent 21 is applied to uncut facing cut surfaces 12a of the plurality of osteoid bodies 16. In this case, the first adhesive agent 21 may be applied to at least one of the facing cut surface 12a. Finally, the facing cut surfaces 12a of the plurality of osteoid bodies 16 are glued in place by means of the first adhesive agent 21. Accordingly, a bamboo board 10 is produced by using the osteoid bodies 16. When a plurality of the osteoid bodies 16 are aligned in a line and the facing cut surfaces 12a are glued in place by means of the first adhesive agent 21, pressure is preferably imparted to the plurality of osteoid bodies 16 aligned in a line so that glued surfaces are in contact with each other.

In addition, the bamboo board 10 produced is low in strength in the gluing direction. However, a plurality of the bamboo boards 10 are prepared and laminated by means of the first adhesive agent 21 to significantly improve its gluing strength, so that the longitudinal directions of the osteoid bodies 16 formed of the bamboo board 10 are orthogonal to each other. Also, another bamboo board is produced by using a bamboo rod whose diameter is different from the bamboo rod 11 used in the bamboo board 10 produced above, and by laminating these bamboo boards by means of the first adhesive agent 21, the gluing strength can be significantly improved. Furthermore, the bamboo board 10 by using the osteoid bodies 16 produced above and a bamboo board by using the square tubular bodies 12 obtained in the first embodiment may be laminated by means of the first adhesive agent 21. The third embodiment is approximately the same as the second embodiment except that the composite board 30 is produced by using the bamboo board 10 formed of the above osteoid bodies 16. Therefore, the same explanations are not repeatedly provided.

In the composite board 30 thus produced, use of osteoid bodies 16 obtained by being cut into a random thickness with a cutting-off process instead of the composite board 30 of the second embodiment can adjust the thickness according to a use thereof. For instance, even if the diameter of a bamboo rod 11 used is large, a thin composite board can be produced. The third embodiment is approximately the same as the second embodiment except that the actions and effects are different. Therefore, the same explanations are not repeatedly provided.

### Explanation of references

- 10: Bamboo board
- 11: Bamboo rod
- 12: Square tubular body
- 16: Osteoid body
- 21: First adhesive agent
- 30: Composite board
- 31: Face material
- 32: Second adhesive agent

### Industrial applicability

The bamboo board of the present invention can be more readily and strongly glued than a case where surface layers of each of the bamboo rods uncut are glued, by removing surface layers of a plurality of bamboo rods with a cutting apparatus and forming square tubular bodies as a square tubular shape, and gluing facing cut surfaces in place by means of a first adhesive agent.
In addition, the bamboo board is produced as a tube and less prone to deformation such as warping generated when using bamboo formed in a flat plate without splitting a bamboo rod and cutting and forming from an arc-shaped bamboo to a flat plate in a conventional method. Since a natural hollow structure of bamboo is used to produce a bamboo board, the bamboo board can be provided as a light bamboo board having a hollow portion therein, compared to a solid structure.

## Claims

1. A bamboo board comprising:
preparing a plurality of square tubular bodies (12) fabricated by cutting a surface layer (11a) of tubes that form bamboo rods (11) so that the cross sectional surfaces that are orthogonal to the longitudinal direction of said bamboo rod (11) have two groups of two parallel facing surfaces;
aligning said plurality of square tubular bodies (12) parallel to one another; and
gluing facing cut surfaces (12a) of said plurality of square tubular bodies (12) in place by means of a first adhesive agent (21).

2. A bamboo board comprising:
preparing a plurality of osteoid bodies (16) fabricated by cutting off two facing surfaces out of four surfaces of the square tubular bodies (12) according to claim 1 in the longitudinal direction of said square tubular bodies (12);
aligning said plurality of osteoid bodies (16) parallel to one another; and
gluing uncut-off and remaining facing cut surfaces (12a) of said plurality of osteoid bodies (16) in place by means of a first adhesive agent (21).

3. The bamboo board according to claim 1 or 2, wherein said first adhesive agent (21) is an aqueous adhesive agent.

4. A composite board comprising: the bamboo board (10) according to any one of claims 1 to 3; and a face material (31) laminated on one or both surfaces of said bamboo board (10) by means of a second adhesive agent (32).

5. The composite board according to claim 4, wherein said second adhesive agent (32) is an aqueous adhesive agent.

6. The composite board according to claim 4, wherein said face material (31) is formed of a plywood, a particle board, a medium density fiberboard, a panel or a paper.

7. A fabrication method for a bamboo board comprising:
a cutting and forming process for cutting a surface layer (11a) of tubes that form bamboo rods (11) and forming said bamboo rods (11) into a square tubular shape to obtain square tubular bodies (12) so that the cross sectional surfaces that are orthogonal to longitudinal direction of said bamboo rods (11) have at least one group of two parallel facing surfaces;
a first adhesive agent applying process for preparing said plurality of square tubular bodies (12), aligning said plurality of square tubular bodies (12) parallel to one another, and
applying the first adhesive agent (21) on facing cut surfaces (12a) of said plurality of square tubular bodies (12); and
a first gluing process for gluing the facing cut surfaces (12a) of said plurality of square tubular bodies (12) in place by means of said first adhesive agent (21).

8. A fabrication method for a bamboo board comprising:
a cutting and forming process for cutting a surface layer (11a) of tubes that form bamboo rods (11) and forming said bamboo rods (11) into a square tubular shape to obtain square tubular bodies (12) so that the cross sectional surfaces that are orthogonal to the longitudinal direction of the bamboo rods (11) have at least one group of two parallel facing surfaces;
a cutting-off process for cutting off two facing surfaces out of four surfaces of said square tubular bodies (12) in the longitudinal direction of said square tubular bodies (12) to obtain osteoid bodies (16);
a first adhesive agent applying process for preparing said plurality of osteoid bodies (16), aligning said plurality of osteoid bodies (16) parallel to one another, and applying the first adhesive agent (21) on uncut facing surfaces (12a) of said plurality of osteoid bodies (16); and
a first gluing process for gluing facing cut surfaces (12a) of said plurality of osteoid bodies (16) in place by means of said first adhesive agent (21).

9. The fabrication method for a bamboo board according to claim 7 or 8, wherein said first adhesive agent (21) is an aqueous adhesive agent.

10. A fabrication method for a composite board comprising:
a second adhesive agent applying process for applying the second adhesive agent (32) on one or both surfaces of the bamboo board (10) produced by a method according to any one of claims 7 to 9; and
a second gluing process for gluing a face material (31) on an applied surface of the bamboo board (10) having said second adhesive agent (32) applied by means of said second adhesive agent (32).

11. The fabrication method for a composite board according to claim 10, wherein said second adhesive agent (32) is an aqueous adhesive agent.

12. The fabrication method for a composite board according to claim 10, wherein said face material (31) is formed of a plywood, a particle board, a medium density fiberboard, a panel or a paper.
